# FASCICULE DE BREVET EUROPEEN

(11) **EP 2 815 268 B1**
(45) Date de publication et mention de la délivrance du brevet: **25.05.2016**
(21) Numéro de dépôt: 13712924.3
(22) Date de dépôt: 14.02.2013
(51) Int. Cl.: G02F 1/01, G09F 9/30, G02F 1/13

(54) **ÉCRAN D'AFFICHAGE ET SON PROCÉDÉ DE FABRICATION**
ANZEIGESCHIRM UND DESSEN HERSTELLUNGSVERFAHREN
DISPLAY SCREEN AND ITS MANUFACTURING PROCESS

(30) Priorité: 16.02.2012 FR 1251440
(43) Date de publication de la demande: 24.12.2014
(73) Titulaire: Commissariat à l'Énergie Atomique et aux Énergies Alternatives, 75015 Paris (FR)
(72) Inventeur: SIMONATO, Jean-Pierre, F-38360 Sassenage (FR); CARELLA, Alexandre, F-64110 Mazeres Lezons (FR); CELLE, Caroline, F-42700 Firminy (FR)
(74) Mandataire: Gevers & Orès
(86) Numéro de dépôt international: PCT/IB2013/051192
(87) Numéro de publication internationale: WO 2013/121367

(56) Documents cités:
- DE-A1-102010 017 706
- JP-A- 2010 103 041
- US-A1- 2009 311 530
- US-A1- 2010 220 379
- LIU LIYU ET AL: "Paperlike thermochromic display", APPLIED PHYSICS LETTERS, AIP, AMERICAN INSTITUTE OF PHYSICS, MELVILLE, NY, US, vol. 90, no. 21, 23 mai 2007 (2007-05-23), pages 213508-213508, XP012094994, ISSN: 0003-6951, DOI: 10.1063/1.2742781

## Description

L'invention concerne un écran d'affichage ainsi qu'un procédé de fabrication de cet écran d'affichage.

Au sens de l'invention, un écran d'affichage est une surface plane ou non, sur laquelle une ou des couleur(s) ou des transparences peuvent être activées en fonction d'un stimulus ou de plusieurs stimuli externes.

Il existe aujourd'hui un grand nombre d'écrans d'affichage disponible sur le marché ou en développement (voir, par exemple, le document US 2010/0220379 A1).

Certain de ces écrans d'affichage sont déjà réalisés sur des plastiques conformables ou pliables dont les couleurs sont en particulier obtenues par l'application d'un courant électrique qui génère de la chaleur et qui fait changer la couleur d'encres thermochromiques en fonction de la température. Pour cela, on utilise des électrodes qui servent d'éléments chauffants.

Les électrodes transparentes habituellement utilisées sont fabriquées à partir d'oxydes métalliques tels que l'oxyde d'indium et d'étain (ITO), ou l'oxyde d'étain dopé au fluor. Cependant, ces électrodes transparentes ne sont pas flexibles : elles perdent leur performance de conduction lorsqu'elles sont soumises de façon répétée à des flexions avec des petits rayons de courbure, par exemple inférieurs à 8 mm.

Les récentes avancées dans le domaine des nanotechnologies ont fait qu'un certain nombre d'électrodes transparentes ont été proposées à base de nanotubes de carbone, de graphène, de polymère (de type PEDOT : PSS) ou de nanofils métalliques, essentiellement en argent. Ces électrodes transparentes peuvent être réalisées sur des films plastiques transparents et donc être identifiées comme des électrodes transparentes flexibles.

Néanmoins, ces électrodes transparentes sont d'une stabilité relativement médiocre. En effet, les polymères sont sensibles aux contraintes chimiques et électriques et aux rayons ultra-violets, la conductivité d'un nanotube de carbone et du graphène est grandement altérée lorsque ces composés sont mis en contact avec certains composés chimiques. De plus, ces techniques présentent toutes des résistances carrées élevées typiquement supérieures à 100 ohms/carré lorsque la transmittance de la lumière visible est supérieure à 90%, sauf à réaliser des dopages ou à utiliser des conditions de fabrication incompatibles avec une production en grand volume.

Ainsi, ces électrodes, qui sont des éléments chauffants transparents, ne peuvent pas être mises à proximité de composés thermochromes (composés organiques, inorganiques ou mélange des deux) afin de réaliser des écrans d'affichage affichant une/des couleur(s) commutable(s) en fonction de la température, c'est-à-dire de la tension imposée aux bornes de l'électrode transparente.

L'invention vise à pallier les problèmes, et en particulier le problème d'une stabilité relativement médiocre, des électrodes transparentes de l'art antérieur en présence de contraintes chimiques et électriques, et en particulier lorsqu'elles sont mises en contact avec des composés thermochromes.

A cet effet, l'invention propose un écran d'affichage comprenant :
- un substrat en un matériau plastique,
- au moins un élément chauffant transparent,
- au moins un composé thermochrome,
caractérisé en ce que le au moins un élément chauffant transparent comprend au moins un nanofil en métal, éventuellement fonctionnalisé.

De préférence, l'élément chauffant qui est le nanofil en métal est en un métal choisi parmi, l'argent, l'or, le cuivre, le platine, le palladium, le nickel, le cobalt, le rhodium, l'iridium, le rhuténium et le fer.

Plus préférablement, le nanofil est en un métal choisi parmi l'argent, l'or et le cuivre.

Ce nanofil peut être fonctionnalisé. Dans ce cas, il comporte à sa surface externe une couche monomoléculaire auto-assemblée. Dans ce cas, il comporte à sa surface externe une couche monomoléculaire auto-assemblée formée à partir d'au moins une molécule de formule I suivante :

R¹-Zₙ-R² Formule I

dans laquelle :
- Z représente un atome de soufre ou de sélénium,
- n = 1 ou 2,
- R¹ et R² représentent chacun indépendamment l'un de l'autre un atome d'hydrogène, ou un groupe hydrocarboné linéaire, ramifié ou cyclique, saturé ou insaturé, éventuellement perfluoré ou partiellement fluoré, comprenant de 1 à 100 atomes de carbone et comportant éventuellement un ou plusieurs hétéroatomes et/ou une ou plusieurs fonctions chimiques comprenant au moins un hétéroatome et/ou un ou plusieurs groupes aromatiques ou hétéroaromatiques, ou une fonction chimique comprenant au moins un hétéroatome ou un groupe aromatique ou hétéroaromatique substitué ou non.

Dans un premier mode de mise en oeuvre préféré du procédé de l'invention, dans la formule I, R¹ est H, Z est S, et R² est une chaine alkyle saturée en C₃ à C₁₈.

Plus préférablement, la molécule de formule I est choisie parmi le 1-propanethiol, le 1-décanethiol et le 1-octadécanethiol.

Dans un second mode de mise en oeuvre préféré du procédé de l'invention, dans la formule I R¹ est H, Z est S, et R² est un groupement aromatique, substitué ou non, en C₄ à C₁₀. Plus préférablement, la molécule de formule I est choisie parmi le benzènethiol, le 4-méthoxybenzènethiol, le 4-trifluorométhylbenzènethiol.

Quant au composé thermochrome, il peut être choisi parmi tout composé thermochrome connu de l'homme du métier.

Cependant, de préférence, il est choisi parmi la lactone cristal violet, le dioxyde de vanadium VO₂ et les mélanges de ceux-ci. En particulier et de préférence, le composé thermochrome est la lactone cristal violet.

Quant au matériau du substrat, il est de préférence choisi parmi le polyéthylènenaphtalate, (PEN) polyéthylènetéréphtalate (PET), le polyméthacrylate de méthyle (PMMA), et un silicone, un textile tissé ou non, à base de coton ou de polyamide.

Pour être flexible et éventuellement étirable, le substrat a de préférence une épaisseur comprise entre 2 et 500 µm inclus. Plus préférablement, cette épaisseur est de 2 à 200 µm inclus. Encore plus préférablement, l'épaisseur du substrat est comprise entre 2 et 100 µm inclus.

L'écran d'affichage de l'invention peut de plus comprendre une couche d'encapsulation en un matériau polymère, de préférence choisi parmi un polymère d'éthylène vinyle acétate (EVA), un polymère de vinyle butyral (PVB) et un polymère d'uréthane.

L'écran d'affichage de l'invention peut également de plus comprendre une couche d'isolation, de préférence en silicone, sur le substrat, ou entre le au moins un élément chauffant transparent et le au moins un composé thermochrome.

L'invention propose également un procédé de fabrication d'un écran d'affichage caractérisé en ce qu'il comprend une étape de dépôt, sur toute, ou partie de, la surface d'un substrat en un matériau plastique, d'au moins un élément chauffant comprenant au moins un nanofil en métal, ce nanofil étant optionnellement fonctionnalisé, et d'au moins un composé thermochrome.

De préférence, le nanofil est en un métal choisi parmi l'argent, l'or, le cuivre, le platine, le palladium, le nickel, le cobalt, le rhodium, l'iridium, le rhuténium et le fer. De préférence, le nanofil est en un métal choisi parmi l'argent, l'or et le cuivre.

Lorsque le nanofil est fonctionnalisé, cette fonctionnalisation est effectuée par une étape de formation d'une couche monomoléculaire auto-assemblée obtenue à partir d'au moins une molécule de formule 1 suivante :

R¹-Zₙ-R² Formule I

dans laquelle :
- Z représente un atome de soufre ou de sélénium,
- n = 1 ou 2,
- R¹ et R² représentent chacun indépendamment l'un de l'autre un atome d'hydrogène, ou un groupe hydrocarboné linéaire, ramifié ou cyclique, saturé ou insaturé, éventuellement perfluoré ou partiellement fluoré, comprenant de 1 à 100 atomes de carbone et comportant éventuellement un ou plusieurs hétéroatomes et/ou une ou plusieurs fonctions chimiques comprenant au moins un hétéroatome et/ou un ou plusieurs groupes aromatiques ou hétéroaromatiques, ou une fonction chimique comprenant au moins un hétéroatome ou un groupe aromatique ou hétéroaramatique substitué ou non.

Dans un premier mode de mise en oeuvre préféré du procédé de l'invention, dans la formule I, R¹ est H, Z est S et R² est une chaine alkyle saturée en C₃ à C₁₈. Plus préférablement, la molécule de formule I est choisie parmi le 1-propanethiol, le 1- décanethiol et le 1-octadécanethiol.

Dans un second mode de mise en oeuvre du procédé de l'invention, R¹ est H, Z est S et R² est un groupement aromatique, substitué ou non, en C₄ à C₁₀.

Plus préférablement, la molécule de formule I est choisie parmi le benzènethiol, le 4-méthoxybenzènethiol et le 4-trifluorométhylbenzènethiol.

Dans un second mode de mise en oeuvre préféré du procédé de l'invention, R¹ est H, Z est S et R² = groupement aromatique, substitué ou non, en C₄ à C₁₀ de carbone, plus préférablement, la molécule de Formule I est choisie parmi le benzènethiol, le 4-méthoxybenzènethiol et le 4-trifluoromethylbenzènethiol.

Dans le procédé de l'invention, le au moins un composé thermochrome est de préférence choisi parmi la lactone cristal violet, le dioxyde de vanadium VO₂ et les mélanges de ceux-ci. Le plus préférablement, le composé thermochrome est la lactone cristal violet.

Le composé thermochrome peut être déposé sous la forme de microcapsules thermochromiques de compositions variables, à base de composés organiques, inorganiques ou un mélange des deux. Ces composés thermochromes peuvent notamment contenir des cristaux liquides.

Un composé thermochrome préféré de l'invention est un leuco-colorant, c'est-à-dire une molécule possédant une forme colorée et une forme transparente.

Quant au substrat, il est en un matériau plastique de préférence choisi parmi le polyéthylènenaphtalate (PEN), polyéthylènetéréphtalate (PET), le polyméthacrylate de méthyle (PMMA), et un silicone.

Ce substrat a de préférence une épaisseur comprise entre 2 et 500 µm inclus. Plus préférablement, le substrat a une épaisseur comprise entre 2 et 200 µm inclus. Le plus préférablement, le substrat a une épaisseur comprise entre 2 et 100 µm inclus

Dans un mode de réalisation préféré, le procédé de l'invention comprend de plus une étape de dépôt d'une couche d'encapsulation du substrat obtenu, cette couche étant en un matériau polymère de préférence choisi parmi un polymère d'éthylène vinyle acétate (EVA), un polymère de vinyle-butyrale (PVB) et un polymère d'uréthane.

Le procédé de l'invention peut de plus comprendre une étape de dépôt d'une couche d'isolation sur la surface du substrat sur laquelle est effectuée le dépôt du au moins un élément chauffant et du au moins un composé thermochrome. De préférence, cette couche d'isolation est en silicone. Une couche d'isolation peut également être déposée entre le au moins un élément chauffant et le au moins un composé thermochrome.

Le dépôt du au moins un nanofil peut être effectué avant le dépôt du au moins un composé thermochrome ou après le dépôt de ce composé thermochrome.

Le dépôt du nanofil métallique peut être effectué par projection sous pression, l'utilisation d'une machine à jet d'encre, à la tournette, par flexographie, par héliogravure ou encore par utilisation d'une raclette.

L'invention sera mieux comprise et d'autres avantages et caractéristiques de celles-ci apparaitront plus clairement à la lecture de la description qui suit.

L'invention propose un procédé de fabrication d'écran d'affichage souple transparent, éventuellement étirable, réalisés sur des substrats plastiques par des techniques d'impression grande surface et à basse température (inférieure à 150°C).

Pour cela, les écrans d'affichage doivent comprendre des matériaux possédant une combinaison optimale de haute conductivité électrique, de transparence optique et de flexibilité.

A ce jour, il n'existe pas d'écran transparent (transmittance de la lumière supérieure à 85% à 550 nm), flexible, éventuellement étirable fonctionnant, avec des composés thermochromes.

Le procédé de l'invention permet d'obtenir un écran transparent, c'est-à-dire ayant une transmittance supérieure à 85% à une longueur d'onde de la lumière de 550 nm, flexible, éventuellement étirable, fonctionnant avec un ou plusieurs composés thermochrome, un film chauffant transparent à base de nanofils en un métal, éventuellement une couche d'encapsulation et une source d'alimentation électrique.

Cet écran comprend basiquement un substrat en plastique.

Ce substrat peut être fait de fibres de plastique tressées. Le substrat doit être transparent et flexible, éventuellement étirable, fonctionnant avec des composés thermochromes. Cela est dû très certainement au fait qu'il existe un préjugé dans l'art concernant l'incompatibilité chimique entre les nanofils métalliques et les composés thermochromes.

A cet effet, le substrat aura une épaisseur comprise entre 2 et 500 µm inclus. Préférentiellement, le substrat aura une épaisseur comprise entre 2 et 200 µm inclus. Le plus préférablement, il aura une épaisseur comprise entre 2 et 100 µm inclus.

On peut citer, à titre d'exemples non exhaustifs, un substrat en polyéthylènenaphtalate (PEN), en polyéthylènetéréphtalate (PET), en ou encore en silicone. Ce substrat peut être revêtu ou non d'une couche d'isolation, en silicone polymérisable thermiquement ou sous radiation UV par exemple. Un exemple possible est l'utilisation du produit Silicone Conformal Coating 422B de MG Chemicals. Le silicone peut être employé pur ou en mélange, par exemple avec une résine époxy comme dans le produit Wearlon®. A cet égard, une couche d'isolation, aussi en silicone, peut également être déposée entre polyméthacrylate de méthyle (PMMA), le(s) composé(s) thermochrome(s) et le réseau de nanofils et/ou entre le substrat revêtu du (des) composé(s) thermochrome(s) et du réseau de nanofils et la couche d'encapsulation.

L'élément chauffant est à base de nanofils métalliques.

Par nanofil métallique on entend, dans l'invention, un objet ayant une partie centrale composée d'un corps métallique de structure voisine d'un cylindre plein dont le rayon est inférieur à 100 nm et la longueur comprise entre 1 et 800 µm.

Les métaux utilisés sont préférentiellement l'argent, l'or, le cuivre, le platine, le palladium, le nickel, le cobalt, le rhodium, l'iridium, le rhuténium, le fer, et les mélanges de ceux-ci. Cependant, on utilisera préférentiellement des nanofils en argent, ou en or, ou en cuivre ou des mélanges de tels nanofils.

Ces nanofils peuvent être obtenus en solution. Leur synthèse est réalisée à partir de précurseurs métalliques réduits en solution. Par exemple, pour les nanofils en argent, on peut utiliser la méthode décrite dans Hu et al. ACS Nano, 2010, 5, 2955-63. Les nanofils de cuivre peuvent être obtenus par la méthode décrite dans BJ Wiley et al., Advanced Materials, 2011, 23, pp4798-4803.

Ces nanofils métalliques peuvent être fonctionnalisés par des molécules. Dans ce cas, ils seront fonctionnalisés par une étape de formation, sur leur surface, d'une couche monomoléculaire auto-assemblée obtenue à partir d'un ou de précurseurs de formule I suivante :

R¹-Zₙ-R² Formule I

dans laquelle :
- Z représente un atome de soufre ou de sélénium,
- n = 1 ou 2,
- R¹ et R² représentent chacun indépendamment l'un de l'autre un atome d'hydrogène, ou un groupe hydrocarboné linéaire, ramifié ou cyclique, saturé ou insaturé, éventuellement perfluoré ou partiellement fluoré, comprenant de 1 à 100 atomes de carbone et comportant éventuellement un ou plusieurs hétéroatomes et/ou une ou plusieurs fonctions chimiques comprenant au moins un hétéroatome et/ou un ou plusieurs groupes aromatiques ou hétéroaromatiques, ou une fonction chimique comprenant au moins un hétéroatome ou un groupe aromatique ou hétéroaromatique substitué ou non.

Des molécules de formule I appropriées sont celles de formule I dans lesquelles R¹ est H, Z est S et R² est une chaine alkyle saturée en C₃ à C₁₈ ou un groupement aromatique substitué ou non, en C₄ à C₁₀.

Des exemples particulièrement préférés de molécules de formule I sont le 1-propanethiol, le 1-décanethiol, le 1-octadécanethiol, le benzénethiol, le 4-méthoxybenzènethiol et le 4-trifluorométhylbenzènethiol.

Cette fonctionnalisation peut recouvrir totalement ou partiellement, c'est-à-dire au moins 10%, de la surface des nanofils.

Cet élément chauffant est obtenu par dépôt des nanofils sous forme de réseau de façon à ce que le courant puisse percoler sur l'ensemble de la couche ainsi formée.

En effet, les nanofils métalliques sont les liens qui permettent au courant de circuler d'un point à un autre de l'électrode. Si le réseau de nanofils n'est pas assez dense, aucun chemin de conduction n'est possible et l'électrode n'est pas conductrice. A l'inverse, à partir d'une certaine densité de nanofils, le réseau devient percolant et les porteurs de charge peuvent être transportés sur toute la surface de l'électrode.

La conductivité des électrodes étant améliorée avec la densité de nanofils présents (au détriment de la transparence), la conception de ces électrodes repose donc sur un compromis transparence/conductivité.

Typiquement, cet élément chauffant à une transmittance supérieure à 90% mesuré à 550 nm et une résistance carrée inférieure à 100 ohms/carré.

Plus préférablement, cet élément chauffant a une résistance carrée inférieure à 60 ohms/carré.

Quant au composé thermochrome utilisé, tout composé thermochrome connu de l'homme de l'art, comme par exemple ceux cités dans Thermochimica Acta 2005, pp7-12, peut être utilisé. Ils sont généralement fournis sous la forme d'une encre qui peut être de nature organique ou inorganique ou un mélange des deux.

Plusieurs composés thermochromes peuvent être utilisés pour former l'écran d'affichage de l'invention, en quantité variable et pour former des surfaces et des épaisseurs variables. Le composé thermochrome peut par exemple changer d'une couleur visible à un caractère transparent, ou d'une couleur à une autre.

A titre d'exemples de composés thermochromes, on peut citer la lactone cristal violet (CAS Number: 1552-42-7), ou le dioxyde de vanadium VO₂ et les mélanges de ceux-ci. De préférence, le composé thermochrome est la lactone cristal violet.

Optionnellement, l'ensemble de la structure substrat/élément chauffant composé(s) thermochrome(s) peut être recouvert par une couche d'encapsulation transparente de type polymère, par exemple par un polymère de poly(éthylène vinyle acétate) (EVA) ou un polymère poly(vinyle butyral) (PVB), ou un polymère d'uréthane.

L'écran d'affichage de l'invention est fabriqué par un procédé permettant de produire à bas coût des écrans d'affichage par des techniques d'impression grande surface.

Ainsi, les dépôts des couches de nanofils métalliques et/ou des composés thermochromes peuvent être effectués en vaporisant une solution contenant les nanofils ou le composé thermochrome sur le substrat. Cette technique consiste à générer des microgouttelettes contenant les nanofils ou les composés thermochromes et à les projeter sous pression sur le substrat. Le substrat peut être chauffé pendant ou après ce dépôt entre 20 et 120°C, par exemple.

Cependant, une autre méthode est l'utilisation de machine à jet d'encre. Encore une autre méthode et l'utilisation d'une tournette (Spin-coater en anglais).

Mais comme cela apparaitra clairement à l'homme de l'art, ce dépôt peut être également effectué par flexographie, héliogravure, raclette.

Afin d'améliorer les performances des électrodes constituant l'élément chauffant, il peut être nécessaire de recuire le réseau de nanofils à une température comprise entre 50 et 150°C.

Eventuellement, deux bandes conductrices non transparentes peuvent être déposées sur les bords de la surface conductrice à base de nanofils déposés sur le substrat. Ces bandes peuvent être, par exemple, réalisées à partir de pâte ou laque d'argent, afin de permettre une meilleure connexion avec les systèmes extérieurs d'alimentation électrique.

Les nanofils peuvent être déposés avant ou après les composés thermochromes.

On peut également déposer une couche d'encapsulation enrobant la structure substrat/élément chauffant.

On peut également prévoir le dépôt d'une couche d'isolation entre le substrat et l'élément chauffant que les composés thermocromes et/ou entre l'élément chauffant et les composés thermocromes, cette couche peut être en silicone.

L'encre contenant le ou les composés thermochrome peut être déposée sur toute la surface du substrat ou de façon localisée. Par exemple, un motif peut être vaporisé à travers un pochoir pour obtenir une forme définie. Le(s) composé(s) thermochrome(s) peu(vent) également être déposé(s) localement par dépôt de gouttes à certains endroits, par jet d'encre.

Quant à l'élément chauffant comprenant les nanofils métalliques, il peut également être déposé sur toute la surface du substrat ou de façon localisée, en veillant à chaque fois à créer des pistes conductrices pouvant être connectées à une alimentation électrique.

Par exemple, un motif peut être vaporisé à travers un pochoir pour réaliser une forme définie. On peut également utiliser un laser, par exemple un laser excimère avec une énergie de 10 à 1000 mJ/cm², préférentiellement entre 20 et 200 mJ/cm²). Dans ce cas le dépôt des nanofils est réalisé sur la surface entière et le laser est appliqué localement pour enlever toute partie non désirée par ablation par laser excimère.

L'alimentation électrique de l'écran d'affichage peut être fixe ou nomade, c'est-à-dire être une batterie, une pile, ou une cellule photovoltaïque, et alimentée de façon continue ou discontinue.

Ainsi, il est possible de maintenir l'élément chauffant légèrement alimenté pour stabiliser le dispositif à une température voulue, par exemple pour éviter tout phénomène de givrage pour les afficheurs externes par exemple.

Afin de mieux faire comprendre l'invention, on va maintenant en décrire plusieurs modes de mise en oeuvre.

### Exemple 1

Des nanofils d'argent sont fabriqués selon le procédé suivant :

1,766 g de PVP (polyvinylpyrrolidone) sont additionnés à 2,6 mg de NaCl (chlorure de sodium) dans 40 ml d'EG (éthylèneglycol). Le mélange est agité à 600 tours par minutes (rpm) à 120°C jusqu'à complète dissolution du PVP + NaCl (environ 4-5 minutes). A l'aide d'une ampoule de coulée, on ajoute goutte à goutte ce mélange à une solution de 40 ml d'EG dans laquelle sont dissous 0,68 g de AgNO₃ (nitrate d'argent). On chauffe le bain d'huile à 160°C et on laisse agiter à 700 rpm pendant 80 minutes. Trois lavages sont réalisés au méthanol en centrifugeant à 2000 rpm pendant 20 mins, puis les nanofils sont précipités à l'acétone et enfin redispersés dans de l'eau ou du méthanol.

Des électrodes sont réalisés sur du PEN (polyéthylènenaphtalate) de 125 µm d'épaisseur par vaporisation de la solution en utilisant un aérographe Aztek A4709 ou par dépôt à la tournette.

Les substrats ainsi formés ont une résistance de feuille de 35 ohms/carré à 91 % de transmittance (à 550 nm).

Un dépôt localisé d'encre thermochrome à base de p-méthylphénol et d'hexadécanol et de lactone cristal violet est effectué sur l'électrode transparente.

Par application d'une tension de 6 V sur l'électrode, un chauffage est obtenu.

A la température d'environ 45°C. la zone définie par le composé thermochrome qui était bleu foncé devient transparente.

Après refroidissement la couleur bleu réapparaît. Le cycle est ainsi répété 10 fois sans modification de réactivité du composé thermochrome.

### Exemple 2.

Des nanofils d'or sont fabriqués selon le procédé suivant :

400 µl de HAuCl₄ (30% dans HCl) sont additionnés à 2 mL d'hexane et 10 mL d'OA (oléylamine) à 80°C. On laisse agiter vigoureusement pendant 5 min et on laisse à cette température en coupant l'agitation pendant 5 h. Le mélange réactionnel devient rouge vif. Un précipité (produit noir foncé) est obtenu en additionnant de l'éthanol. Après centrifugation à 3400 tr.min⁻¹ et lavages à l'éthanol pendant 10 min, les nanofils sont dispersés dans l'hexane.

Des électrodes sont réalisés sur du PEN (polyéthylènenaphtalate) de 10 µm d'épaisseur par vaporisation de la solution en utilisant un aérographe Aztek A4709 en chauffant les substrats à 60°C.

Les substrats ainsi formés ont une résistance de feuille de 55 ohms/carré à 87% de transmittance (à 550 nm).

Un dépôt localisé d'encre thermochrome à base de p-méthylphénol et d'hexadécanol et de lactone cristal violet est effectué sur l'électrode transparente.

Par application d'une tension de 6 V sur l'électrode, un chauffage est obtenu.

A la température d'environ 45°C, la zone définie par le thermochrome qui était bleu foncé devient transparente.

Après refroidissement la couleur bleu réapparaît. Le cycle est effectué 10 fois sans modification de réactivité du composé thermocrome.

### Exemple 3.

Des nanofils de cuivre sont fabriqués selon le procédé décrit dans la publication BJ Wiley et al, Advanced Materials, 2011, 23, pp4798-4803.

Des électrodes sont réalisés sur du PEN (polyéthylènenaphtalate) de 10 µm d'épaisseur par vaporisation de la solution en utilisant un aérographe Aztek A4709 en chauffant les substrats à 65°C.

Les substrats ainsi formés ont une résistance de feuille de 52 ohms/carré à 91 % de transmittance (à 550 nm).

Un dépôt localisé d'encre « Chameleon® Reversible Thermochromic Inks red 47°C » commercialisé par les sociétés B&H Colour Change est effectué sur l'électrode transparente par vaporisation.

Par application d'une tension de 6 V sur l'électrode, un chauffage est obtenu.

A la température d'environ 47°C, la zone définie par le composé thermochrome qui était rouge devient transparente.

Après refroidissement la couleur rouge réapparaît. Le cycle est ainsi répété 10 fois sans modification de réactivité du composé thermocrome.

## Revendications

1. Ecran d'affichage comprenant :
- un substrat en un matériau plastique,
- au moins un élément chauffant transparent,
- au moins un composé thermochrome,
**caractérisé en ce que** le au moins un élément chauffant transparent comprend au moins un nanofil en métal, éventuellement fonctionnalisé, de préférence le nanofil est en un métal choisi parmi l'argent, l'or, le cuivre, le platine, le palladium, le nickel, le cobalt, le rhodium, l'iridium, le rhuténium et le fer, de préférence parmi l'argent, l'or et le cuivre.

2. Ecran d'affichage selon la revendication 1 **caractérisé en ce que** le au moins un nanofil est fonctionnalisé et comporte à sa surface externe une couche monomoléculaire auto-assemblée formée à partir d'un ou plusieurs précurseurs de molécules de formule 1 suivante :
R¹-Zₙ-R² Formule I
dans laquelle :
- Z représente un atome de soufre ou de sélénium
- n = 1 ou 2
RI et R² représentent chacun indépendamment l'un de l'autre un atome d'hydrogène, ou un groupe hydrocarboné linéaire, ramifié ou cyclique, saturé ou insaturé, éventuellement perfluoré ou partiellement fluoré, comprenant de 1 à 100 atomes de carbone et comportant éventuellement un ou plusieurs hétéroatomes et/ou une ou plusieurs fonctions chimiques comprenant au moins un hétéroatome et/ou un ou plusieurs groupes aromatiques ou hétéroaromatiques, ou une fonction chimique comprenant au moins un hétéroatome ou un groupe aromatique ou hétéroaromatique substitué ou non, de préférence RI est H, Z est S et R² est une chaîne alkyle saturée en C₃ à C₁₈ ou un groupement aromatique, substitué ou non, en C₄ à C₁₀.

3. Ecran d'affichage selon la revendication 2 caractérisé en que les molécules de formule 1 sont choisies parmi le 1-propanethiol, le 1-décanethiol, le 1-octadécanethiol, le benzènethiol, le 4-méthoxybenzènethiol, le 4-trifluoromethylbenzènethiol.

4. Ecran d'affichage selon l'une quelconque des revendications précédentes **caractérisé en ce que** le au moins un composé thermochrome est choisi parmi la lactone cristal violet ou le dioxyde de vanadium VO₂ et les mélanges de ceux-ci, de préférence le composé thermochrome est le cristal violet.

5. Ecran d'affichage selon l'une quelconque des revendications précédentes **caractérisé en ce que** le substrat est en un matériau plastique choisi parmi le polyéthylènenaphtalate (PEN), polyéthylènetéréphtalate (PET), le polyméthacrylate de méthyle (PMMA), et un silicone et, de préférence a une épaisseur comprise entre 2 et 500 µm inclus, de préférence entre 2 à 200 µm inclus, préférablement entre 2 et 100 µm inclus.

6. Ecran d'affichage selon l'une quelconque des revendications précédentes **caractérisé en ce qu'**il comprend de plus une couche d'encapsulation en un matériau choisi parmi un polymère d'éthylène vinyle acétate (EVA), et un polymère de vinyle-butyral (PVB) et un polymère d'uréthane.

7. Ecran d'affichage selon l'une quelconque des revendications précédentes **caractérisé en ce que** le substrat est revêtu d'une couche d'isolation, de préférence en silicone.

8. Procédé de fabrication d'un écran d'affichage **caractérisé en ce qu'**il comprend une étape de dépôt, sur tout ou partie de la surface d'un substrat en un matériau plastique, d'au moins un élément chauffant comprenant au moins un nanofil en métal, ce nanofil étant optionnellement fonctionnalisé, et d'au moins un composé thermochrome, de préférence le nanofil est en un métal choisi parmi l'argent, l'or, le cuivre, le platine, le palladium, le nickel, le cobalt, le rhodium, l'iridium, le ruthénium et le fer, de préférence parmi l'argent, l'or et le cuivre.

9. Procédé selon la revendication 8 **caractérisé en ce que** le au moins un nanofil est fonctionnalisé par une étape de formation d'une couche monomoléculaire auto-assemblée à partir d'au moins une molécule de formule I suivante :
R¹-Zₙ-R² Formule I
dans laquelle :
- Z représente un atome de soufre ou de sélénium
- n = 1 ou 2
R¹ et R² représentent chacun indépendamment l'un de l'autre un atome d'hydrogène, ou un groupe hydrocarboné linéaire, ramifié ou cyclique, saturé ou insaturé, éventuellement perfluoré ou partiellement fluoré, comprenant de 1 à 100 atomes de carbone et comportant éventuellement un ou plusieurs hétéroatomes et/ou une ou plusieurs fonctions chimiques comprenant au moins un hétéroatome et/ou un ou plusieurs groupes aromatiques ou hétéroaromatiques, ou une fonction chimique comprenant au moins un hétéroatome ou un groupe aromatique ou hétéroaromatique substitué ou non de préférence R¹ est H, Z est S et R² est une chaine alkyle saturée en C₃ à C₁₈ ou un groupement aromatique, substitué ou non, en C₄ à C₁₀.

10. Procédé selon la revendication 9 **caractérisé en ce que** les composés de formule I est choisi parmi le 1-propanethiol, le 1-décanethiol, le 1-octadécanethiol, le benzènethiol, le 4-méthoxybenzènethiol, le 4-trifluorométhylbenzènethiol.

11. Procédé de fabrication d'un écran d'affichage selon l'une quelconque des revendications 8 à 10 **caractérisé en ce que** le au moins un composé thermochrome est choisi parmi la lactone cristal violet, le dioxyde de vanadium, les mélanges de ceux-ci, de préférence le composé thermochrome est la lactone cristal violet.

12. Procédé de fabrication d'un écran d'affichage selon l'une quelconque des revendications 8 à 11 **caractérisé en ce que** le substrat est en un matériau plastique choisi parmi le polyéthylènenaphtalate (PEN), polyéthylènetéréphtalate (PET), le polyméthacrylate de méthyle (PMMA), et un silicone, et, de préférence, a une épaisseur comprise entre 2 et 500 µm inclus, de préférence entre 2 à 200 µm inclus, préférablement entre 2 et 100 µm inclus.

13. Procédé de fabrication d'un écran d'affichage selon l'une quelconque des revendications 8 à 12 **caractérisé en ce qu'**il comprend de plus une étape de dépôt d'une couche d'encapsulation du substrat obtenu qui est en un matériau polymère choisi parmi un polymère d'éthylène vinyle acétate (EVA), un polymère de vinyl-butyral (PVB) et un polymère d'uréthane.

14. Procédé de fabrication selon l'une quelconque des revendications 8 à 13 caractérisé en qu'il comprend de plus une étape de dépôt d'une couche d'isolation sur la surface du substrat sur laquelle est effectuée le dépôt du au moins un nanofil en métal et du au moins un composé thermochrome, de préférence en silicone.

15. Procédé de fabrication d'un écran d'affichage selon l'une quelconque des revendications 8 à 14 **caractérisé en ce que** le dépôt du au moins un nanofil est effectué avant le dépôt du au moins un composé thermochrome.

16. Procédé de fabrication d'un écran d'affichage selon l'une quelconque des revendications 8 à 14 **caractérisé en ce que** le dépôt du au moins un nanofil en métal est effectué après le dépôt du au moins un composé thermochrome.

17. Procédé selon l'une quelconque des revendications 8 à 16 **caractérisé en ce que** le dépôt du nanofil métallique est effectué par projection sous pression, utilisation d'une machine à jet d'encre, à la tournette, par flexographie, par héliogravure, ou par utilisation d'une raclette.

## Patentansprüche

1. Anzeigebildschirm, der Folgendes umfasst:
- ein Substrat aus einem Kunststoffmaterial,
- mindestens ein transparentes Heizelement,
- mindestens eine thermochrome Verbindung,
**dadurch gekennzeichnet, dass** das mindestens eine transparente Heizelement mindestens einen Nanodraht aus Metall umfasst, der gegebenenfalls funktionalisiert ist, wobei der Nanodraht vorzugsweise aus einem Metall ist, das unter Silber, Gold, Kupfer, Platin, Palladium, Nickel, Kobalt, Rhodium, Iridium, Ruthenium und Eisen, vorzugsweise unter Silber, Gold und Kupfer, ausgewählt ist.

2. Anzeigebildschirm nach Anspruch 1, **dadurch gekennzeichnet, dass** der mindestens eine Nanodraht funktionalisiert ist und an seiner Außenfläche eine selbstorganisierende monomolekulare Schicht umfasst, die ausgehend von einer oder mehreren Vorstufen von Molekülen der folgenden Formel 1 gebildet ist:
R¹-Zₙ-^{R2} Formel 1
in der:
- Z ein Schwefel- oder Selenatom darstellt
- n = 1 oder 2
wobei R¹ und R² jeweils unabhängig voneinander ein Wasserstoffatom oder eine lineare, verzweigte oder zyklische, gesättigte oder ungesättigte, gegebenenfalls perfluorierte oder teilweise fluorierte Kohlenwasserstoffgruppe darstellen, die zwischen 1 und 100 Kohlenstoffatome umfasst und gegebenenfalls ein oder mehrere Heteroatome und/oder eine oder mehrere chemische Funktionen, die mindestens ein Heteroatom und/oder eine oder mehrere aromatische oder heteroaromatische Gruppen umfasst, oder eine chemische Funktion umfasst, die mindestens ein Heteroatom oder eine substituierte oder nicht substituierte aromatische oder heteroaromatische Gruppe umfasst, R¹ vorzugsweise H ist, Z S ist und R² eine gesättigte C₃-C₁₈-Alkylkette oder eine substituierte oder nicht substituierte aromatische C₄-C₁₀-Gruppe ist.

3. Anzeigebildschirm nach Anspruch 2, **dadurch gekennzeichnet, dass** die Moleküle der Formel 1 unter 1-Propanthiol, 1-Decanthiol, 1-Octadecanthiol, Benzolthiol, 4-Methoxybenzolthiol, 4-Trifluormethylbenzolthiol ausgewählt sind.

4. Anzeigebildschirm nach einem der vorhergehenden Ansprüche, **dadurch gekennzeichnet, dass** die mindestens eine thermochrome Verbindung unter Kristallviolettlakton oder Vanadiumdioxid VO₂ und Mischungen davon ausgewählt ist, wobei die thermochrome Verbindung vorzugsweise Kristallviolett ist.

5. Anzeigebildschirm nach einem der vorhergehenden Ansprüche, **dadurch gekennzeichnet, dass** das Substrat aus einem Kunststoffmaterial ist, das unter Polyethylennaphthalat (PEN), Polyethylenterephthalat (PET), Polymethylmethacrylat (PMMA) und einem Silikon ausgewählt ist und vorzugsweise eine Dicke aufweist, die zwischen einschließlich 2 und 500 µm, vorzugsweise zwischen einschließlich 2 und 200 µm, noch mehr zu bevorzugen zwischen einschließlich 2 und 100 µm, enthalten ist.

6. Anzeigebildschirm nach einem der vorhergehenden Ansprüche, **dadurch gekennzeichnet, dass** er ferner eine Verkapselungsschicht aus einem Material umfasst, das unter einem Ethylenvinylacetatpolymer (EVA) und einem Vinylbutyralpolymer (PVB) und einem Urethanpolymer ausgewählt ist.

7. Anzeigebildschirm nach einem der vorhergehenden Ansprüche, **dadurch gekennzeichnet, dass** das Substrat mit einer Isolationsschicht, vorzugsweise aus Silikon, bedeckt ist.

8. Verfahren zur Herstellung eines Anzeigebildschirms, **dadurch gekennzeichnet, dass** es einen Schritt des Aufbringens von mindestens einem Heizelement, das mindestens einen Nanodraht aus Metall umfasst, wobei dieser Nanodraht wahlweise funktionalisiert ist, und mindestens einer thermochromen Verbindung auf der gesamten oder einem Teil der Fläche eines Substrats aus einem Kunststoffmaterial umfasst, wobei der Nanodraht vorzugsweise aus einem Metall ist, das unter Silber, Gold, Kupfer, Platin, Palladium, Nickel, Kobalt, Rhodium, Iridium, Ruthenium und Eisen, vorzugsweise unter Silber, Gold und Kupfer, ausgewählt ist.

9. Verfahren nach Anspruch 8, **dadurch gekennzeichnet, dass** der mindestens eine Nanodraht durch einen Schritt zur Bildung einer selbstorganisierenden monomolekularen Schicht ausgehend von mindestens einem Molekül der folgenden Formel I funktionalisiert ist:
R¹-Zₙ-R² Formel I
in der:
- Z ein Schwefel- oder Selenatom darstellt
- n = 1 oder 2
wobei R¹ und R² jeweils unabhängig voneinander ein Wasserstoffatom oder eine lineare, verzweigte oder zyklische, gesättigte oder ungesättigte, gegebenenfalls perfluorierte oder teilweise fluorierte Kohlenwasserstoffgruppe darstellen, die zwischen 1 und 100 Kohlenstoffatome umfasst und gegebenenfalls ein oder mehrere Heteroatome und/oder eine oder mehrere chemische Funktionen, die mindestens ein Heteroatom und/oder eine oder mehrere aromatische oder heteroaromatische Gruppen umfasst, oder eine chemische Funktion umfasst, die mindestens ein Heteroatom oder eine substituierte oder nicht substituierte aromatische oder heteroaromatische Gruppe umfasst, R¹ vorzugsweise H ist, Z S ist und R² eine gesättigte C₃-C₁₈-Alkylkette oder eine substituierte oder nicht substituierte aromatische C₄-C₁₀-Gruppe ist.

10. Verfahren nach Anspruch 9, **dadurch gekennzeichnet, dass** die Verbindungen der Formel 1 unter 1-Propanthiol, 1-Decanthiol, 1-Octadecanthiol, Benzolthiol, 4-Methoxybenzolthiol, 4-Trifluormethylbenzolthiol ausgewählt werden.

11. Verfahren zur Herstellung eines Anzeigebildschirms nach einem der Ansprüche 8 bis 10, **dadurch gekennzeichnet, dass** die mindestens eine thermochrome Verbindung unter Kristallviolettlakton oder Vanadiumdioxid und Mischungen davon ausgewählt ist, wobei die thermochrome Verbindung vorzugsweise Kristallviolettlakton ist.

12. Verfahren zur Herstellung eines Anzeigebildschirms nach einem der Ansprüche 8 bis 11, **dadurch gekennzeichnet, dass** das Substrat aus einem Kunststoffmaterial ist, das unter Polyethylennaphthalat (PEN), Polyethylenterephthalat (PET), Polymethylmethacrylat (PMMA) und einem Silikon ausgewählt ist und vorzugsweise eine Dicke aufweist, die zwischen einschließlich 2 und 500 µm, vorzugsweise zwischen einschließlich 2 und 200 µm, noch mehr zu bevorzugen zwischen einschließlich 2 und 100 µm, enthalten ist.

13. Verfahren zur Herstellung eines Anzeigebildschirms nach einem der Ansprüche 8 bis 12, **dadurch gekennzeichnet, dass** es ferner einen Schritt zum Aufbringen einer Verkapselungsschicht des erhaltenen Substrats umfasst, das aus einem Polymermaterial ist, das unter einem Ethylenvinylacetatpolymer (EVA), einem Vinylbutyralpolymer (PVB) und einem Urethanpolymer ausgewählt ist.

14. Verfahren zur Herstellung nach einem der Ansprüche 8 bis 13, **dadurch gekennzeichnet, dass** es ferner das Aufbringen einer Isolationsschicht auf der Fläche des Substrats umfasst, auf dem das Aufbringen von dem mindestens einen Nanodraht aus Metall und der mindestens einen thermochromen Verbindung, vorzugsweise aus Silikon, durchgeführt wird.

15. Verfahren zur Herstellung eines Anzeigebildschirms nach einem der Ansprüche 8 bis 14, **dadurch gekennzeichnet, dass** das Aufbringen des mindestens einen Nanodrahts vor dem Aufbringen der mindestens einen thermochromen Verbindung durchgeführt wird.

16. Verfahren zur Herstellung eines Anzeigebildschirms nach einem der Ansprüche 8 bis 14, **dadurch gekennzeichnet, dass** das Aufbringen des mindestens einen Nanodrahts aus Metall nach dem Aufbringen der mindestens einen thermochromen Verbindung durchgeführt wird.

17. Verfahren nach einem der Ansprüche 8 bis 16, **dadurch gekennzeichnet, dass** das Aufbringen des metallischen Nanodrahts durch Spritzen unter Druck, Verwendung einer Tintenstrahlmaschine, einer Schleudermaschine, durch Flexodruck, durch Tiefdruck oder durch Verwendung einer Rakel durchgeführt wird.

## Claims

1. A display screen comprising:
- a substrate made of a plastic material,
- at least one transparent heating element,
- at least one thermochromic compound,
**characterized in that** said at least one transparent heating element comprises at least one metal nanowire, optionally functionalized, preferably the nanowire is in a metal selected from among silver, gold, copper, platinum, palladium, nickel, cobalt, rhodium, iridium, ruthenium and iron, preferably from among silver, gold and copper.

2. The display screen according to claim 1, **characterized in that** said at least one nanowire is functionalized and includes at its external surface a self-assembled monomolecular layer formed from one or several precursor molecules of the following formula 1:
R¹-Zₙ-R² Formula 1
wherein:
- Z represents a sulfur or selenium atom,
- n= 1 or 2,
R¹ and R² each represent independently of each other a hydrogen atom, or a saturated or unsaturated, linear, branched or cyclic hydrocarbon group optionally perfluorinated or partly fluorinated, comprising from 1 to 100 carbon atoms and optionally including one or several heteroatoms and/or one or several chemical functions comprising at least a heteroatom and/or one or several aromatic or heteroaromatic groups, or a chemical function comprising at least one heteroatom or an aromatic or heteroaromatic group either substituted or not, preferably R¹ is H, Z is S, and R² is a saturated C₃-C₁₈ alkyl group or an aromatic C₄-C₁₀ group either substituted or not.

3. The display screen according to claim 2, **characterized in that** the molecules of formula 1 are selected among 1-propanethiol, 1-decanethiol, 1-octadecanethiol, benzenethiol, 4-methoxybenzenethiol, 4-trifluoromethylbenzenethiol.

4. The display screen according to anyone of the preceding claims, **characterized in that** said at least one thermochromic compound is selected from crystal violet lactone or vanadium oxide VO₂, and mixtures thereof, preferably the thermochromic compound is crystal violet.

5. The display screen according to anyone of the preceding claims, **characterized in that** the substrate is in a plastic material selected from polyethylene naphthalate (PEN), polyethylene terephthalate (PET), polymethyl methacrylate (PMMA) and a silicone and, preferably has a thickness comprised between 2 and 500 µm inclusive, preferably between 2 to 200 µm inclusive, preferably between 2 and 100 µm inclusive.

6. The display screen according to anyone of the preceding claims, **characterized in that** it further comprises an encapsulation layer made of a material selected from an ethylene vinyl acetate polymer (EVA), and a vinyl-butyral polymer (PVB) and a urethane polymer.

7. The display screen according to anyone of the preceding claims, **characterized in that** the substrate is coated with an insulation layer, preferably made of silicone.

8. A method for manufacturing a display screen, **characterized in that** it comprises a step of depositing on all or a part of the surface of a substrate made of a plastic material, at least one heating element comprising at least one metal nanowire, this nanowire being optionally functionalized, and at least one thermochromic compound, preferably the nanowire is made of a metal selected among silver, gold, copper, platinum, palladium, nickel, cobalt, rhodium, iridium, ruthenium, and iron, preferably from among silver, gold and copper.

9. The method according to claim 8, **characterized in that** the at least one nanowire, is functionalized by a step of forming a self-assembled monomolecular layer from at least one molecule of the following formula 1:
R¹Zₙ-R² Formula 1
wherein:
- Z represents a sulfur or selenium atom,
- n = 1 or 2,
R¹ and R² each represent independently of each other a hydrogen atom, or a saturated or unsaturated, linear, branched or cyclic hydrocarbon group optionally perfluorinated or partly fluorinated, comprising from 1 to 100 carbon atoms and optionally including one or several heteroatoms and/or one or several chemical functions comprising at least a heteroatom and/or one or several aromatic or heteroaromatic groups, or a chemical function comprising at least one heteroatom or an aromatic or heteroaromatic group either substituted or not, preferably R¹ is H, Z is S, and R² is a saturated C₃-C₁₈ alkyl group or an aromatic C₄-C₁₀ group either substituted or not.

10. The method according to claim 9, **characterized in that** the compounds of formula 1 are selected from among 1-propanethiol, 1-decanethiol, 1-octadecanethiol, benzenethiol, 4-methoxybenzenethiol, 4-trifluoromethylbenzenethiol.

11. The method for manufacturing a display screen according to anyone of claims 8 to 10, **characterized in that** said at least one thermochromic compound is selected among crystal violet lactone, vanadium dioxide, mixtures thereof, preferably the thermochromic compound is crystal violet lactone.

12. The method for manufacturing a display screen according to anyone of claims 8 to 11, **characterized in that** the substrate is made of a plastic material selected among polyethylene naphthalate (PEN), polyethylene terephthalate (PET), polymethyl methacrylate (PMMA) and a silicone and, preferably has a thickness comprised between 2 and 500 µm inclusive, preferably between 2 to 200 µm inclusive, preferably between 2 and 100 µm inclusive.

13. The method for manufacturing a display screen according to anyone of claims 8 to 12, **characterized in that** it further comprises a step of depositing an encapsulation layer of the obtained substrate which is made of a polymeric material selected among an ethylene vinyl acetate polymer (EVA), and a vinyl-butyral polymer (PVB) and a urethane polymer.

14. The manufacturing method according to anyone of claims 8 to 13, **characterized in that** it further comprises a step of depositing an insulation layer on the surface of the substrate on which is carried out the deposition of said at least one metal nanowire and of said at least one thermochromic compound, preferably made of silicone.

15. The method for manufacturing a display screen according to anyone of claims 8 to 14, **characterized in that** the deposition of said at least one nanowire is carried out before the deposition of said at least one thermochromic compound.

16. The method for manufacturing a display screen according to anyone of claims 8 to 14, **characterized in that** the deposition of said at least one nanowire is carried out after the deposition of at least one thermochromic compound.

17. The method according to anyone of claims 8 to 16 **characterized in that** the deposition of the metal nanowire is carried out by pressurized projection, or by the use of an ink jet machine, spin coating, flexography, rotogravure or by using a doctor blade.
